Europäisches Patentamt

(19) European Patent Office

Office européen des brevets

(11) Publication number: **0 153 965**
**A1**

## (12) EUROPEAN PATENT APPLICATION

(21) Application number: 84102065.4

(22) Date of filing: 28.02.84

(51) Int. Cl.⁴: **B 01 D 35/14**
B 01 D 29/42, B 01 D 36/00

(43) Date of publication of application:
11.09.85 Bulletin 85/37

(84) Designated Contracting States:
AT BE CH DE FR GB LI LU NL SE

(71) Applicant: Ghezzi, Eugenio
Via Wagner 4
Reggio Emilia(IT)

(72) Inventor: Ghezzi, Eugenio
Via Wagner 4
Reggio Emilia(IT)

(74) Representative: Sassatelli, Franco
INIP via Ruggi 5
I-40137 Bologna(IT)

(54) Cartridge filter with cut out device.

(57) Cartridge filter, (12) particularly for water, to be either connected or not with water cleaners, (56, 57) with valve device (16) and two positions: on of them can allow the passage of the fluid through the filtering cartridge and the other enables the connection directly between the inflow and outflow bores by excluding the filtering cartridge which can be easily cleaned or replaced.

FIG. 4

EP 0 153 965 A1

Croydon Printing Company Ltd.

- 1 -

"Cartridge filter with cut out device"

Cartridge filters are known for the most different fluids and particular
ly for water. Such filters cause many inconveniences. To connect them to
inflow and outflow ducts, many and complicated fittings and auxiliary
valve devices are required, both for making up the distance between the
filter fittings and the duct positions on which it must be fitted, and
to allow the cartridge insulation from the circuit whenever it must be
cleaned or replaced. Complicated fittings and valve devices are also re
quired if the filtering action has to be interrupted by directly connect
ing the inflow and outflow pipes, or if filtering is wish to be carried
out but in some given periods  of time. The connection with other clean
ing devices, such as softeners, dechlorers, conditioners and others, ge
nerally turns out to be complex and causes considerable connection problems. The above invented device eliminates these inconveniences, offer
ing other considerable advantages, as it will be hereafter illustrated.

Object of the invention is a cartridge filter associated with a valve
apt to connect at wish the inflow and outflow bores, or directly either
by excluding the filtering cartridge or through this one. The valve is
obtained with a drawer device, or similar ones, which in one position
directly connects the inflow and outflow bores of the fluid, whereas in
another position it compels the fluid to pass through the filtering cartridge. The drawer valve consists of four chambers: two central adjacent respectively connected with the one and the other inflow fitting of the fluid to filter and for the outflow of the filtered fluid, and a-ther two end chambers by the side of each of the other two central ones: the drawer valve in the filtering position closes, with a diaphragm, the communication between the central chambers, keeping opened the communica tions respectively between the central and the end adjacent one comuni cating with the filtering cartridge; in the position of filtering exclu sion, on the contrary, the drawer diaphragms shuts the communications of each central chamber with the outer ones, leaving the free communication between the central chambers. The inflow openings are placed along a tangential axis of the filter body and turned one on the opposi te side of the other so as to enable the filter to be fitted in the ducts of the different devices, and the opening axis can also coincide with the piping one.

The filter substantially consists of a cartridge container and of a head connected by means of an intermediate distributor. The inflow and outflow bores are opened on the upper part of the head and tangentially to it, whereas the valve-body containing the drawer valve is fitted by their side and in parallel position to their axis. The distributor body shows three parallel ducts, of which an axial one and two side ones: one of the two side ducts is "passing" so as to connect one chamber of the valve body, when the valve is open, with the inflow opening and with the container of the filtering cartridge: the central conduit base is connect-ted with the inside upper part of the filtering cartridge and, by meas of a side offtake, with the other side duct communicating with one cham-ber of the valve-body, which in its turns communicated with the outflow opening when the valve is open. The distributor body can be replaced with another also fitted with three parallel ducts: one side conduit acts like the already described distributor, whereas the central duct lower part is connected with the inside upper part of the filtering cartridge and by means of a side offtake with an inflow opening suitable for connection with another apparatus for fluid treatment, such as a depurator or other, the other side duct being laterally connected with the outlet opening for this other cleaning device and, on the upper side, with a chamber of the valve body; this one communicated with the outflow outfit of the filtered water when the valve is open.

The said filter includes a mixer of the filtered fluid with the one still to filter consisting of a body including a conical duct connected at one side with the fitting which feeds the fluid to filter and with the fitting distributing the filtered fluid at the other side, so that the same fluid pressure determines the run of the not filtered fluid which is automatically added to the not filtered one. The mixer includes a pin valve and similar one, allowing to change the width of the cone vertex so that, by acting on this valve, it is possible to regulate at wish the same width and, therefore, the run. The filter just described is its different kinds turns out to be particularly suitable for the water filtering, either in connection or not with other devices, such as water cleaners and others, therefore, as softeners, dechlorers, conditioners and so on.

The features and the purposes of the invented device will turn out still clearer from the examples of execution fitted with schematic sketches given here below.

Fig. 1 - Perspective view of the filter.

Fig. 2 - Transversal section of the head.

Fig. 3 - Longitudinal section of the distributor.

Fig. 4 - Variant form of the filter for connection with a cleaner in perspective view.

Fig. 5 - Section of the distributor.

Fig. 6 - Particular of the mixer longitudinal section.

Fig. 7 - Filter in connection with a cleaner in perspective view.

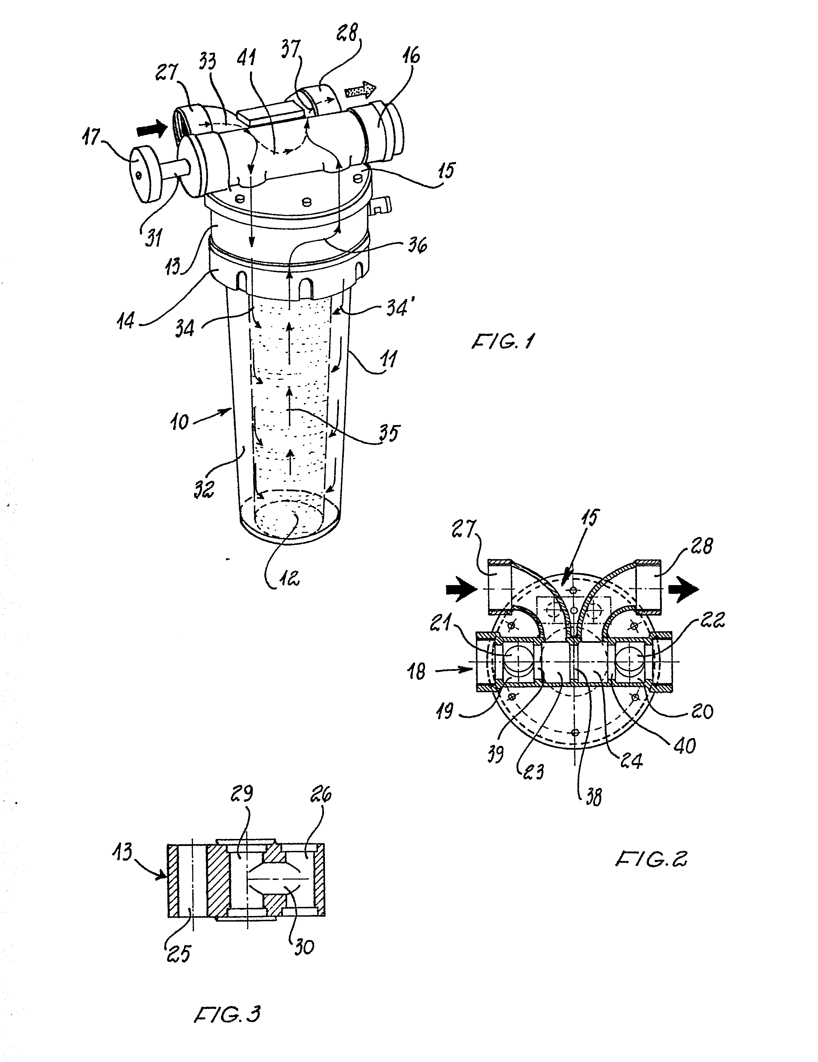

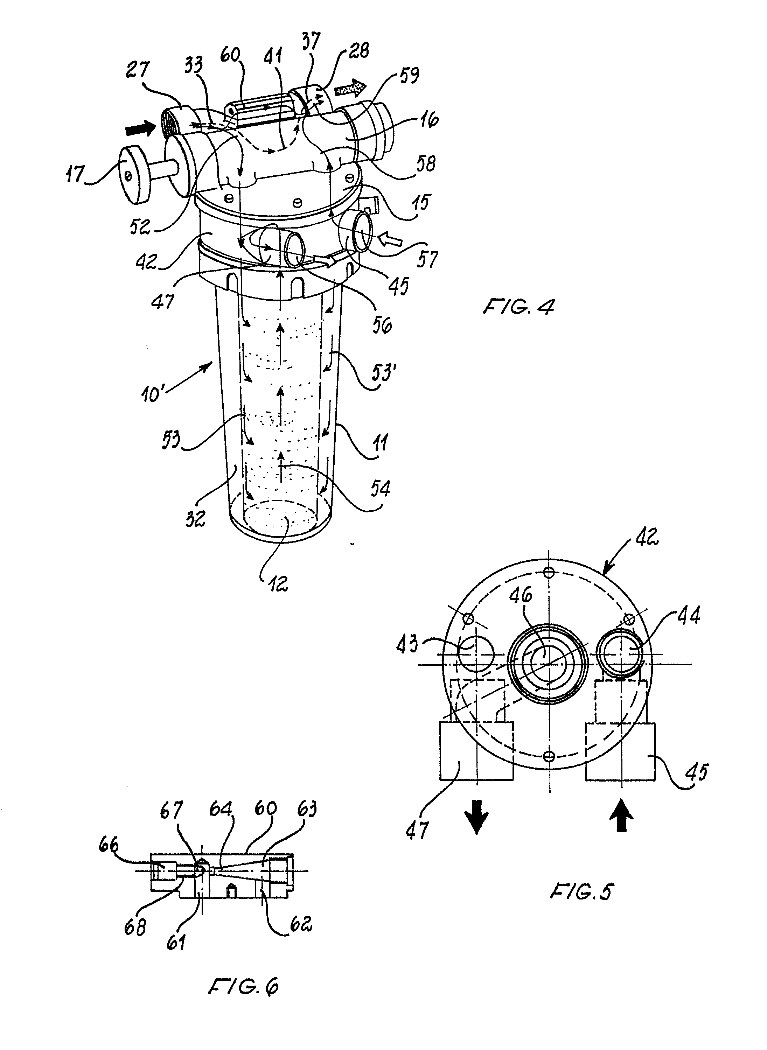

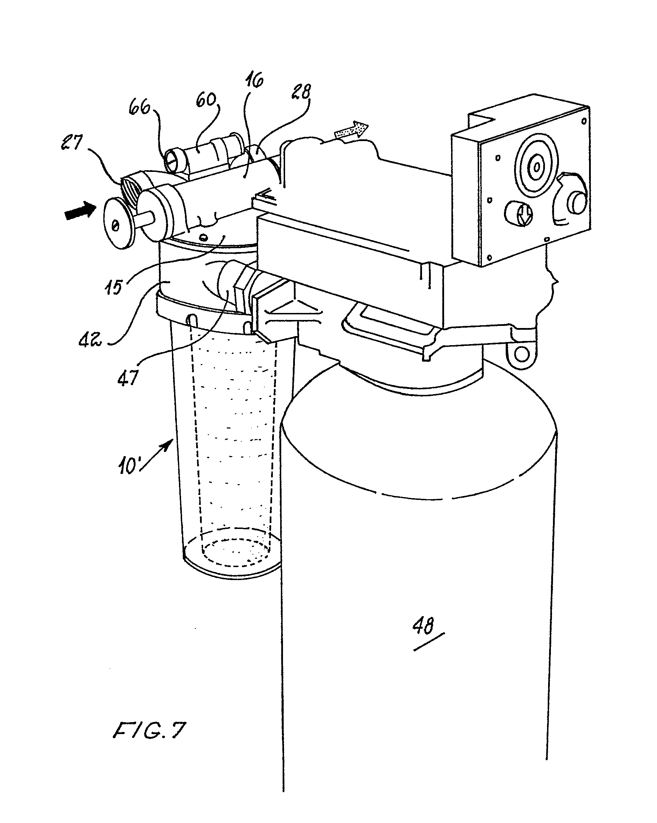

Filter 10 substantially consists of a glass 11 accommodating the filtering cartridge 12, connected by means of ring 14 to distributor 13, below head 15. This last one, in its turn, includes the cylinfrical valve body 16 fitted with an inside drawer axially sliding in the cylindrical position 18 (Fig. 2) and to be operated from outside by means of knob 17 connected to drawer with pin 31. The cylindrical lodgement 18 includes the outer chambers 19 and 20, communicating respectively with ducts 25 and 26 of the distributor by means of bores 21 and 22, and the central chambers 23 and 24, respectively communicating with fitting 27 for the inflow of the water to be filtered and with fitting 28 for the filtered water outflow. As it clearly appears from fig. 3, the central duct 29 of the distributor communicates with the parallel duct at its side 26, by means of the transversal offtake 30. When the knob is in the opened position, the communication 38 between chambers 23 and 24 is closed and, therefore, the water to filter flows from fitting 27, gets into chamber 23 and, through chamber 19, passes into duct 25 of the distributor communicating with chamber 32 of glass 11 surrounding the filtering cartridge. After having passed through the fil ter, the water flows into duct 29 of the distributor and, through off take 30, into duct 26. This last one ends in chamber 20 and, consequent ly, the filtered water passes into the side chamber 24 and then comes out from fitting 28. The water run is shown in fig. 1 with lines 33, 34, 34', 35, 36, 37. If the filtering action is wished to be interrupted, one has but to shift knob 17 into the closing position to put the drawer valve into such a position to shut the communications 39 between chambers 19 and 26, the communication 40 between chambers 24 and 20, and to open the communication 38 between chambers 23 and 24. Therefore, the water to filter which flows from 27 passing through chambers 23 and 24, gets out directly into fitting 28 without passing through the filter. The water run, in this case, is shown in fig. 1 with the lines 33, 41, 37 . Filter 10'(Fig. 4) substantially consists like the previous one, but with distributor 42 fitted with a side duct 43 for the inflow into the glass chamber corresponding to duct 25 of the first distributor, with

- 5 -

the following differences. Side duct 44 connects chamber 22 of valve-body 18 with fitting 45 for inflow. Central duct 46 connects the central part of the filter with the outflow fitting 47. Fittings 45 and 47 are apt for connection respectively with the outflow and inflow openings of a water treatment apparatus as cleaner 48 of fig. 7.

The water flows from fitting 27, passes into chambers 23 and 19 of the valve body and, therefore, into duct 43 of the distributor (Fig. 5) from which it gets into the glass lodging the filter. The filtered water passes from the filter into the central duct 46 of the distributor and, through offtake 48, flows out into fitting 47 connecting it with the cleaner entrance. The water cleaned in this last device returns into the distributor by means of fitting 45 (Fig. 5). From this fitting it flows into duct 44 and, consequently, into chamber 20 of the valve body and, pouring into chamber 24, it flows out from the head fitting 28. The water run towards the depurator is shown in fig. 4 by lines 52,53, 53', 54, 55, 56 and the one of the depurated water by lines 57, 58, 59. It isobviously always possible to completely cut out the filter and the depurator thus obtaining the direct connection of fittings 27 and 28 through chambers 23 and 24 of valve-body 16 by shifting the drawer valve, as already stated in the description of the first type.

In fig. 4 the mixer 60 can be seen, which is further illustrated by the longitudinal section (Fig. 6). It consists of a parallelopiped including two ducts 61 and 62 communicating respectively with the special bores foreseen for this purpose in fittings 27 and 28 (Fig. 2) of the head. These ducts are transversally connected by conical offtake 63. The outflow opening of the cone can be reduced at wish by means of pin 67 of valve 66 which can be slide axially if turned on its axle 68.

The not filtered water enters in circulation of the soft water through offtake 63 with a delivery in accordance with the pressure of the fluid.

0153965

This delivery can be regulated at wish by acting on the pin valve 66.

- With a very simple and quick operation, the filter can be engaged and disengaged at will.

- Only by replacing the distributor, the filter can be used either independently or in connection with a water treatment device, as a cleaner or onother.

- The fittings for the connection to the duct of the water to filter and of the filtered one are set transversally in order to facilitate and siplify in a considerable way their setting on the installations.

- According to the need, the installation can be equipped with a water running sense from the right to the left or in contrary sense.

- Any complicated set of valves and fittings, generally necessary when setting up the conventional filters, is thus eliminated.

- Estremely easy cleaning and replacement of the filter cartridges.

Claims.

0153965

1) Cartridge filter characterized by the fact that it is fitted with a valve apt to perform the connection with the inflow and outflow opening, or directly, either by cutting out the filtering cartridge or through this one.

2) Cartridge filter as per the above claim 1, characterized by the fact that the valve is obtained with a drawer device and the like, which in one position directly connects the inflow and outflow openings of the fluid, whereas in another position this one is forced to get into the filtering cartridge, from which it comes out filtered from the outflow opening.

3) Cartridge filter according to the claims 1 and 2, characterized by the fact that the drawer valve includes four rooms, two central adjacent respectively connected with the one and the other inflow fitting of the fluid to be filtered and of outflow of the filtered fluid, and other two compartments at the two sides of the central ones, the drawer valve in the filtering position shuts with a diaphragm the communication between the central rooms, keeping open the communications respectively between the central rooms and the side one communicating with the filtering cartridge, while in position of filtering cutout, the drawer diaphragms shut the communications between the central rooms and the outer rooms, leaving free the communication between the two central compartments.

4) Cartridge filter, as per claims 1 - 3, characterized by the fact that the inflow openings along an axis tangential to the filter body and turned one to the opposite side of the other, in order to thus facilitate the filter fitting in the ducts of the different apparatuses, the opening axis being also coincident with the duct axis.

5) Cartridge filter as per claims 1 - 4, characterized by the fact that it substantially consists of a cartridge container and of a head connected by an intermediate distributor.

6) Cartridge filter, as per claims 1 - 5 characterized by the fact that
the inflow and outflow openings are open on the upper part of the head
and tangentially to it, whereas the valve body, containing the drawer
valve, is set parallelly to their axle at their sides.

7) Cartridge filter, as per claims 1 - 6, characterized by the fact that
the distributor-body shows three parallel ducts, one central and two side ducts - one side duct being "passing" in order to connect, when the
valve is open, one room of the valve-body with the inflow opening and
with the container of the filtering cartridge, the central duct being
connected in its lower part with the upper inner side of the filtering
cartridge and, by means a side offtake, with the other side duct commu
nicating with one of the rooms in the valve-body, which in its turn is
communicating with the outflow opening when the valve is open.

8) Cartridge filter as per claims 1 - 7, characterized by the fact that
the distributing body can be replaced with another one also with three
parallel ducts, one side duct being apt to connect - when the valve is
open - one room of the valve body communicating with the inflow fitting
of the fluid to filter, with the container of the filtering cartridge
already described, the central duct being connected at its lower side
with the inside upper part of the filtering cartridge and, by means
of a side offtake, with the inflow opening for the connection with
another fluid treatment device, such as a cleaner or other, the other
side duct being connected sidewise with the outflow opening for this o
ther device and, on the upper part, with a room of valve body communi-
cating with the outflow fitting of the filtered water when the valve
is open.

9) Cartridge filter as per claims 1 - 8, characterized by the fact that
it includes a mixer of the filtered fluid with the one still to be filtered, consisting of a body including a conical duct connected on one
side to the fitting feeding the fluid to filter and, on the other side,
with the fitting distributing the filtered fluid so as the same pressure

0153965

of the fluid is determining the volume of the fluid not yet filtered which automatically is added to the filtered one.

10) Cartridge filter as per claims 1 - 9, characterized by the fact that the mixer includes a pin valve and similars, which enables to change the opening of the cone vertex so that, by acting on this valve, the width of the same opening can be regulated at wish and, therefore, also the volume can be adjusted.

11) Cartridge filter as per claims 1 - 10, characterized by the fact that it is particularly suitable for the water filtering in connection with other devices, such as water cleaners, and others and, therefore, as water softeners, dechlorers, conditioners and others.

12) All that substantially as described and illustrated for the specified purposes.
On behalf.

0153965

FIG.1

FIG.2

FIG.3

0153965

FIG. 4

FIG.5

FIG. 6

FIG.7

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 109 428  (MULLER J.) <br> * pages 1-3 * | 1-4 | B 01 D  35/14 <br> B 01 D  29/42 <br> B 01 D  36/00 |
| A |  | 6,7 |  |
|  | --- |  |  |
| X | US-A-3 926 815  (R.M. McCLORY) <br> * figure 2 * | 1 |  |
|  | --- |  |  |
| X | US-A-2 978 107  (J. GUTKOWSKI) <br> * columns 1-7 * | 1 |  |
| A |  | 5-11 |  |
|  | ----- |  |  |

TECHNICAL FIELDS
SEARCHED (Int. Cl.4)

B 01 D
C 02 F

The present search report has been drawn up for all claims

| Place of search <br> THE HAGUE | Date of completion of the search <br> 18-12-1984 | Examiner <br> DE PAEPE P.F.J. |
|---|---|---|